(19) **Europäisches Patentamt**

**European Patent Office**

**Office européen des brevets**

(11) **EP 1 570 471 B1**

(12) **EUROPEAN PATENT SPECIFICATION**

(45) Date of publication and mention
of the grant of the patent:
**21.06.2006 Bulletin 2006/25**

(21) Application number: **03772551.2**

(22) Date of filing: **14.11.2003**

(51) Int Cl.:
***G11B 11/105*** (2006.01)

(86) International application number:
**PCT/IB2003/005439**

(87) International publication number:
**WO 2004/051639 (17.06.2004 Gazette 2004/25)**

(54) **METHOD AND APPARATUS FOR DYNAMIC READOUT DECISION LEVEL ADJUSTMENT FOR USE IN DOMAIN EXPANSION READING**

VERFAHREN UND GERÄT FÜR DYNAMISCHE AUSLESESCHWELLENANPASSUNG ZUM GEBRAUCH IN DOMÄNENERWEITERUNGSLESEN

PROCEDE ET DISPOSITIF POUR REGLER LE NIVEAU DE DECISION DE LECTURE DYNAMIQUE, UTILISES POUR LA LECTURE D'EXPANSION DE DOMAINE

(84) Designated Contracting States:
**AT BE BG CH CY CZ DE DK EE ES FI FR GB GR HU IE IT LI LU MC NL PT RO SE SI SK TR**

(30) Priority: **05.12.2002 EP 02080139**

(43) Date of publication of application:
**07.09.2005 Bulletin 2005/36**

(73) Proprietor: **Koninklijke Philips Electronics N.V.
5621 BA Eindhoven (NL)**

(72) Inventors:
 • **VERSCHUREN, Coen, A.**
 **NL-5656 AA Eindhoven (NL)**
 • **IMMINK, Albert, H., J.**
 **NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**EP-A- 0 984 445          WO-A-03/085660
US-B1- 6 385 141**

 • **PATENT ABSTRACTS OF JAPAN vol. 2000, no. 08, 6 October 2000 (2000-10-06) & JP 2000 149344 A (HITACHI LTD;HITACHI MAXELL LTD), 30 May 2000 (2000-05-30) -& US 6 567 348 B1 (TANI MANABU ET AL) 20 May 2003 (2003-05-20)**
 • **BLOM P W M ET AL: "SPATIAL RESOLUTION OF DOMAIN COPYING IN A MAGNETIC DOMAIN EXPANSION READOUT DISK" IEEE TRANSACTIONS ON MAGNETICS, IEEE INC. NEW YORK, US, vol. 37, no. 5, PART 2, September 2001 (2001-09), pages 3860-3864, XP001083214 ISSN: 0018-9464**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method and an apparatus for reading a domain expansion recording medium, such as a MAMMOS (Magnetic AMplifying Magneto-Optical System) disk, comprising a recording or storage layer and an expansion or readout layer, wherein a copy window is dynamically controlled through variation of a predetermined reading parameter in response to a control information derived from a readout pulse.

In conventional magneto-optical storage systems, the minimum width of the recorded marks is determined by the diffraction limit, i.e. by the Numerical Aperture (NA) of the focusing lens and the laser wavelength. A reduction of the width is generally based on shorter wavelength lasers and higher NA focusing optics. During magneto-optical recording, the minimum bit length can be reduced to below the optical diffraction limit by using Laser Pulsed Magnetic Field Modulation (LP-MFM). In LP-MFM, the bit transitions are determined by the switching of the field and the temperature gradient induced by the switching of the laser.

In domain expansion techniques, like MAMMOS, a written mark with a size smaller than the diffraction limit is copied from a storage layer to a readout layer upon laser heating with the help of an external magnetic field. Due to the low coercivity of this readout layer, the copied mark will expand to fill the optical spot and can be detected with a saturated signal level which is independent of the mark size. Reversal of the external magnetic field collapses the expanded domain. A space in the storage layer, on the other hand, will not be copied and no expansion occurs. Therefore, no signal will be detected in this case.

To read out the bits or domains in the storage layer, the thermal profile of the optical spot is used. When the temperature of the readout layer is above a predetermined threshold value, the magnetic domains are copied from the storage layer to the magneto-statically coupled readout layer. This is because the stray field $H_S$ from the storage layer, which is proportional to the magnetization of this layer, increases as a function of temperature. The magnetization $M_S$ increases as a function of temperature for the temperature region just above a compensation temperature $T_{comp}$. This characteristic results from the use of a rare earth-transition metal (RE-TM) alloy which generates two counteracting magnetizations $M_{RE}$ (rare earth component) and $M_{TM}$ (transition metal component) with opposite directions.

The application of an external magnetic field causes the copied domain in the readout layer to expand so as to give a saturated detection signal independent of the size of the original domain. The copying process is very non-linear. When the temperature is above the threshold value, magnetic domains are coupled from the storage layer to the readout layer. For temperatures above the threshold temperature the following condition is satisfied:

$$H_S + H_{ext} \geq H_c \qquad\qquad (1)$$

where $H_S$ is the stray field of the storage layer at the readout layer, $H_{ext}$ is the external applied field, and $H_c$ is the coercive field of the readout layer rdl. The spatial region where this copying occurs is called the copy window' w. The size of the copy window w is very critical for accurate readout. If the condition (1) is not fulfilled (copy window w = 0), no copying takes place at all. On the other hand, an oversized copy window w will cause overlap with neighboring bits (marks) and will lead to additional 'interference peaks'. The size of the copy window w depends on the exact shape of the temperature profile (i.e. the exact laser power, but also the ambient temperature), the strength of the externally applied magnetic field, and on material parameters that may show short (or long) range variations.

The laser power used in the readout process should be high enough to enable copying. On the other hand, a higher laser power also increases the overlap of the temperature-induced coercivity profile and the stray field profile of the bit pattern. The coercivity $H_c$ decreases and the stray field increases with increasing temperature. When this overlap becomes too large, correct readout of a space is no longer possible due to false signals generated by neighboring marks. The difference between this maximum and the minimum laser power determines the power margin, which decreases strongly with decreasing bit length. Experiments have shown that, bit lengths of 0.10 $\mu$m can be correctly detected with the current methods, but at a narrow power margin of less than 1%. Thus, the power margin remains quite small for highest densities, so that optical power control during readout is essential.

In MAMMOS, the synchronization of the external field with the recorded data is crucial. Accurate clock recovery is possible by using data-dependent field switching. Furthermore, the range of allowed laser powers for correct readout at high densities is quite narrow. However, this sensitivity to readout laser power can also be exploited to achieve an accurate power control loop, i.e. dynamic copy window control, using the readout signals from the recorded data. This is done by adding a small modulating component to the laser power, thus inducing timing shifts of the MAMMOS signals. A lock-in detection of these shifts can serve to correct any change in laser power, external field, or ambient temperature to keep the copy window constant. In this way, an accurate and robust readout is possible, allowing much higher densities than with a conventional system.

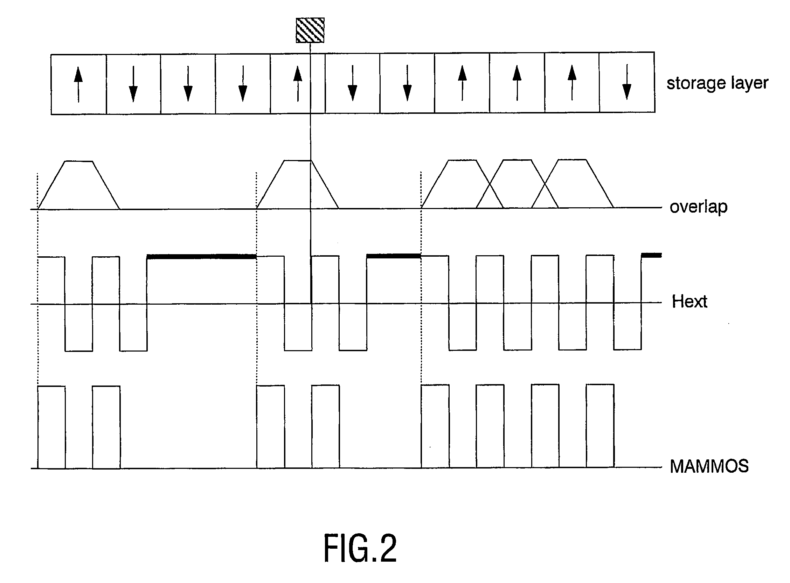

Figure 2 shows some key signals for readout of MAMMOS disks in a steady-state situation with constant laser power, constant ambient temperature, homogeneous disk properties, constant field strength, constant coil-disk distance, etc. The top graph shows the magnetic bits in the storage layer. The second graph shows the overlap signal (convolution) of the magnetic bit pattern and the copy window. The third graph shows the external magnetic field, and the bottom graph shows the obtained MAMMOS signal. When the overlap signal is non-zero, copying of domains will take place. The external magnetic field is kept high until a bit or domain is copied from the storage layer and expanded in the readout layer (cf. bold lines in Fig. 2). Then, after a fixed delay, the external field is reversed and the domain is collapsed until the next bit transition or domain copying occurs.

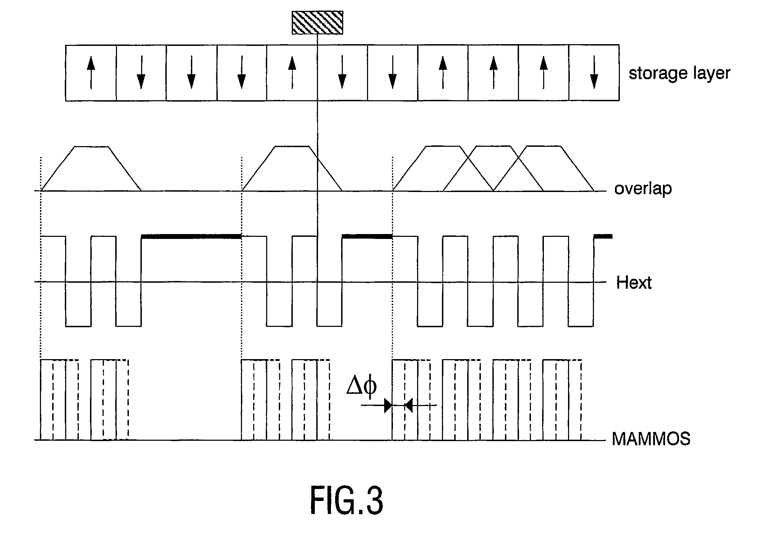

Figure 3 shows a diagram similar to Figure 2, but now one of the parameters to be controlled, e.g. the laser power, is increased deliberately, e.g. according to the above described dynamic copy window control feature (cf. IEEE Transactions on Magnetics, vol 37, No. 5, Sept 2001, pages 3860 - 3864, which forms the basis for the preamble of the independent claims). This increase/decrease (wobbling) is done with a predefined change pattern, e.g. a periodic pattern with a small amplitude. The wobbling causes the copy window to increase or decrease in size synchronously with the wobble frequency. Comparing Figs. 2 and 3, it becomes clear that when the copy window increases in size the next transition will appear somewhat earlier than expected. On the other hand, when the copy window decreases in size the next transition will be delayed slightly. This is the phase error $\Delta\phi$ shown in Fig. 3.

A disadvantage of this dynamic control method , which is known from WO 03/107 340 (relevant under Article 54 (3) EPC), is that, if a sufficiently low error rate is to be obtained, the induced timing or phase shifts or errors $\Delta\phi$ should be small compared with the space run length or pulse position increments. On the other hand, the shifts should be large enough to be detected reliably and will thus limit the possible storage density.

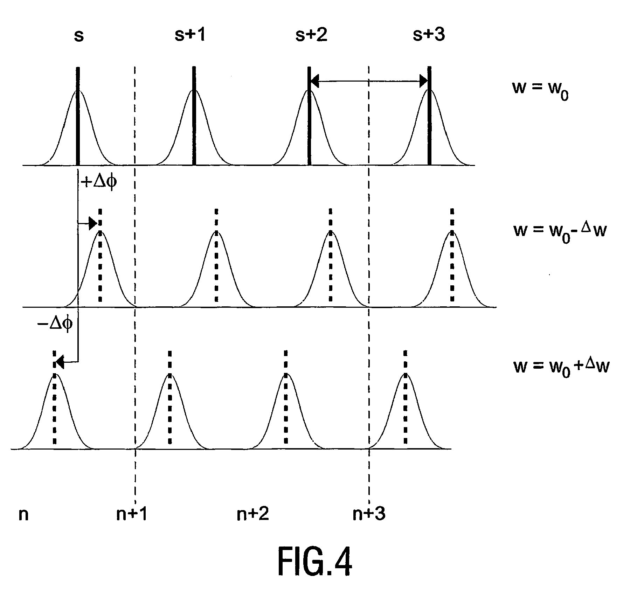

Figure 4 shows on the horizontal axis the space run lengths determined from the measured delays (bold lines in Figs. 2 and 3) for different sizes of the copy window, i.e. nominal size $w_0$, and $w_0$ +/- $\Delta w$ for max and min during modulation. The vertical bold lines s, s+1, s+2, and s+3 indicate the nominal space run lengths, and the surrounding Gaussian curves represent the normalized probability distributions. The width of each Gaussian curve, which can be described as a kind of 'jitter' component, is determined by the quality of the disk (substrate, material), recording and readout performance, etc., i.e. the accuracy of the boundaries of the recorded domains as well as the accuracy and reproducibility of the MAMMOS readout process. Upon detection, each measured run length is compared with a predetermined decision level pattern comprising decision levels n, n+1, n+2, and n+3, represented as thin, dashed lines, usually placed halfway between the nominal run lengths. When the run length is between level n and n+1, it is assigned to nominal value s, when it is between n+1 and n+2, to nominal value s+1, etc. Thus, if part of a Gaussian curve extends over a decision level, this gives rise to a non-zero probability of detecting a false run length detection. The distance between two adjacent nominal space run lengths can be regarded as a space increment or space run length quantization step.

For reliable readout, the error rate (before error correction) should typically be lower than $10^{-3}$ or $10^4$ . This error rate is equal to the total area under the Gaussian curve outside its corresponding decision levels. In Figure 4, the space increment is chosen to be large enough so that the Gaussian curves and the decision levels are sufficiently far apart to avoid a significant increase in error rate when the window size $w_0$ is modulated with an amplitude $\Delta w$, which corresponds to a shift or error $\Delta\phi = \Delta w/2$ of the nominal space run lengths.

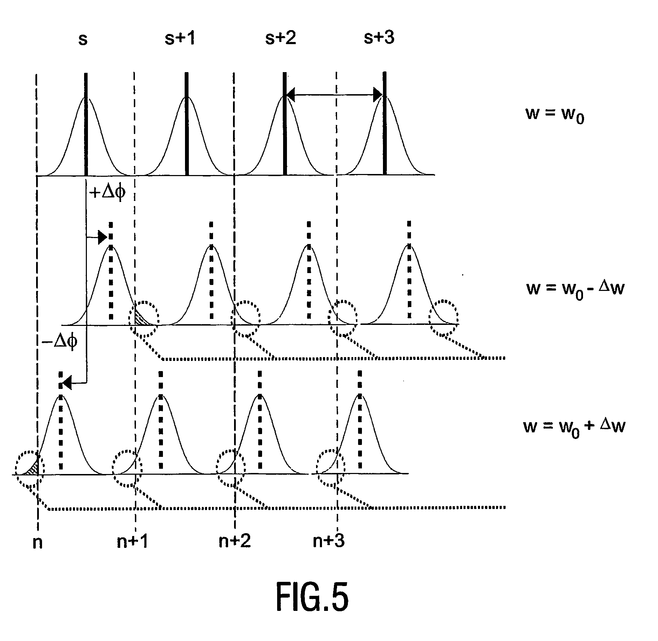

Figure 5 shows a diagram similar to that of Figure 4, but the space increment is smaller here, i.e. a higher recording density. For the nominal copy window size $w_0$ the error rate is still low, but for a smaller or larger size ($w_0$ +/- $\Delta w$) a significant fraction of run lengths, see e.g. hatched areas of Gaussian curves in Figure 5, will be assigned a value that is too large or too small, respectively. In the middle curve, which corresponds to a decreased copy window size $w_0$ - $\Delta w$, a value which is too large may be assigned to a significant number of detected space run lengths, while in the lower curve, which corresponds to an increased copy window size $w_0$ + $\Delta w$, a value which is too small may be assigned to a significant number of detected space run lengths, as is indicated by the dotted circles in Figure 5.

It is an object of the present invention to provide a reading method and an apparatus by means of which a robust and reliable readout process can be achieved even at a high recording density. This object is achieved by providing a method as claimed in claim 1 and by providing an apparatus as claimed in claim 16.

Accordingly, the decision level pattern is adjusted such that it compensates for the amount of shift induced by the modulation of the copy window. The decision level(s) is/are adjusted so as to prevent or minimize erroneous detection and significantly improve signal detection and storage density.

The control information can be derived from a deviation of the phase of a clock signal recovered from the readout pulse with respect to the average phase value of a clock signal derived from said readout pulse or with respect to the phase of a wobbled groove or embossed marks provided on the recording medium, or any combination of these.

The readout value may be a code run length, e.g. a space run length or pulse position. Thus decoding of a phase or run length shift can be based on a simple phase detection, while the detected phase error signal can be used for decision level adjustment.

Furthermore, the predetermined parameter may correspond to the value of the radiation power and/or the external magnetic field. The additional change pattern may be a periodic modulation pattern of a predetermined frequency, and the characteristic parameter may correspond to the sign and/or amplitude of the periodic modulation pattern.

The decision level pattern may comprise at least one decision level. Then, each decision level of the decision level pattern may be adjusted to a respective intermediate level. The respective intermediate level may be selected from at least one discrete intermediate level. Thus at least one discrete intermediate level may comprise a first intermediate level corresponding to a first range, e.g. an upper range, of said characteristic parameter and a second intermediate level corresponding to a second range, e.g. a lower range, of said characteristic parameter.

The predetermined additional pattern may be selected so that DC-free readout data is obtained, wherein the adjusting step can be performed by monitoring separate running sums calculated for each set of intermediate levels. The decision level pattern may then be adjusted, e.g. by using respective loop filter means to which the separate running sums are supplied.

As an alternative to the above discrete decision level arrangement, the respective intermediate level may be obtained by a continuous level adjustment.

The control information may be obtained from a deviation of a maximum value of a phase error of the recovered clock signal from a predetermined set value.

The adjusting means of the reading apparatus may comprise comparator means for setting the decision level pattern and summing means for calculating at least one running sum used for adjusting the decision level pattern. Moreover, the adjusting means may comprise loop filter means for filtering at least one running sum. Additionally, the adjusting means may comprise adding means for adding said at least one running sum to an input signal of the comparator means. This input signal may be obtained from a phase-locked loop circuit of a clock recovery means used for generating the control information.

The objects, features and advantages of the present invention will be apparent from the following more particular description of embodiments of the invention, with reference to the accompanying drawings in which

Fig. 1 is a schematic diagram of a magneto-optical disk player, according to an embodiment of the invention;

Fig. 2 is a diagram indicating characteristic signals of a MAMMOS readout scheme for a predetermined constant copy window size;

Fig. 3 is a diagram indicating characteristic signals of a MAMMOS readout scheme for a modulated copy window size leading to a shift in the detected space run length;

Fig. 4 is a diagram indicating low-density nominal space run lengths and a corresponding decision level pattern;

Fig. 5 is a diagram indicating high-density nominal space run lengths and the corresponding decision level pattern;

Fig. 6 is a diagram indicating high-density nominal space run lengths and an adjusted decision level pattern according to an embodiment of the invention; and

Fig. 7 is a schematic block diagram of a run length detection circuitry with adjustable decision level pattern according to an embodiment of the invention.

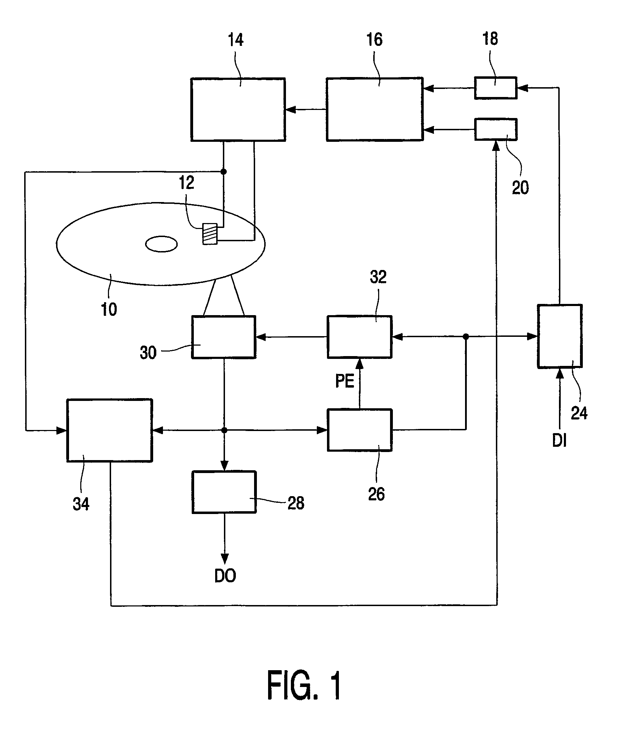

The embodiments will now be described on the basis of a MAMMOS disk player as indicated in Fig. 1. Fig. 1 schematically shows the construction of the disk player according to a preferred embodiment. The disk player comprises an optical pick-up unit 30 having a laser light radiating section for irradiation of a magneto-optical recording medium or record carrier 10, such as a magneto-optical disk, with light that has been converted, during recording, into pulses with a period synchronized with code data, and a magnetic field applying section comprising a magnetic head 12 which applies a magnetic field in a controlled manner during recording and playback on and from the magneto-optical disk 10. In the optical pick-up unit 30, a laser is connected to a laser driving circuit which receives recording and readout pulses from a recording/readout pulse-adjusting unit 32 so as to control the pulse amplitude and timing of the laser of the optical pick-up unit 30 during a recording and readout operation. The recording/readout pulse adjusting circuit 32 receives a clock signal from a clock generator 26 which may comprise a PLL (Phase Locked Loop) circuit.

It is noted that, for reasons of simplicity, the magnetic head 12 and the optical pickup unit 30 are shown on opposite sides of the disk 10 in Fig. 1. However, according to the preferred embodiment, they should be arranged on the same side of the disk 10.

The magnetic head 12 is connected to a head driver unit 14 and receives code-converted data via a phase adjusting circuit 18 from a modulator 24 during recording. The modulator 24 converts input recording data into a prescribed code.

The head driver 14 receives a timing signal via a playback adjusting circuit 20 from a timing circuit 34 during playback, which playback adjusting circuit 20 generates a synchronization signal for adjusting the timing and amplitude of pulses applied to the magnetic head 12. The timing circuit 34 derives its timing signal from the data readout operation, as will be described later. Thus, a data-dependent field switching can be achieved. A recording/playback switch 16 is provided for switching or selecting the respective signal to be supplied to the head driver 14 during recording and during playback.

Furthermore, the optical pick-up unit 30 comprises a detector for detecting laser light reflected from the disk 10 and for generating a corresponding reading signal applied to a decoder 28 which is arranged to decode the reading signal so as to generate output data. Furthermore, the reading signal generated by the optical pick-up unit 30 is supplied to a clock generator 26 in which a clock signal obtained from embossed clock marks of the disk 10 is extracted or recovered, and which supplies the clock signal for synchronization purposes to the recording pulse adjusting circuit 32 and the modulator 24. In particular, a data channel clock may be generated in the PLL circuit of the clock generator 26. It is noted that the clock signal obtained from the clock generator 26 may also be supplied to the playback adjusting circuit 20 so as to provide a reference or fallback synchronization which may support the data dependent switching or synchronization controlled by the timing circuit 34.

In the case of data recording, the laser of the optical pick-up unit 30 is modulated with a fixed frequency corresponding to the period of the data channel clock, and the data recording area or spot of the rotating disk 10 is locally heated at equal distances. Additionally, the data channel clock output by the clock generator 26 controls the modulator 24 to generate a data signal with the standard clock period. The recording data are modulated and code-converted by the modulator 24 to obtain a binary run length information corresponding to the information of the recording data.

The structure of the magneto-optical recording medium 10 may correspond to the structure described in JP-A-2000-260079.

In Fig. 1, the timing circuit 34 is provided for supplying a data-dependent timing signal to the playback adjusting circuit 20. The data-dependent switching of the external magnetic field may alternatively be achieved in that the timing signal is supplied to the head driver 14, so as to adjust the timing or phase of the external magnetic field. The timing information is obtained from the (user) data on the disk 10. To achieve this, the playback adjusting circuit 20 or the head driver 14 is adapted to provide an external magnetic field which is normally in the expansion direction. When a rising signal edge of a MAMMOS peak is observed by the timing circuit 34 at an input line connected to the output of the optical pickup unit 30, the timing signal is supplied to the playback adjusting circuit 20 such that the head driver 14 is controlled to reverse the magnetic field after a short time to collapse the expanded domain in the readout layer, and shortly after that to reset the magnetic field to the expansion direction. The total time between the peak detection and the field reset is set by the timing circuit 34 to correspond to the sum of the maximum allowed copy window and one channel bit length on the disk 10 (times the linear disk velocity).

Furthermore, a dynamic copy window control function is provided through application of a modulation, e.g. wobble or change pattern, to the laser power control signal and a continuous measurement of the size w of the copy window, using information from the detected data signal in the read mode. When the wobble frequency lies above the bandwidth of the clock recovery PLL circuit of the clock generator 26, the phase error of this PLL circuit can be used to detect the small deviation or phase error $\Delta\phi$ from the expected transition position.

The frequency deviation of the introduced wobble or change pattern should have a zero average value. However, the phase error $\Delta\phi$ obtained here cannot be used yet as an absolute error signal for laser power control as only the absolute scale is known, but no reference (zero or offset) is present. I.e., only changes in the size of the copy window can be measured. To circumvent this problem, the derivative of the copy window size as a function of temperature can be measured to obtain a control information for controlling the size of the copy window. Due to the fact that the derivative or amount of change of the copy window size directly leads to the phase error $\Delta\phi$, the amplitude of the detected phase error $\Delta\phi$ corresponds to the derivative and can thus be used for copy window control. As a reference condition, this amplitude of the phase error $\Delta\phi$ must fulfill an initially determined set condition or set point. The deviation from this set point can then be used as a control signal PE for the laser power control procedure or for controlling any other suitable reading parameter, e.g. strength of the external magnetic field.

Any changes in the size of the copy window due to changes in parameters, such as coil-disc distance, ambient temperature, etc., are counteracted by the controlled parameter, e.g. laser power in the present example.

According to an embodiment, the decision levels described in connection with Figs. 4 and 5 are adjusted in dependence on the sign and/or on the amplitude of the modulation, and thus the corresponding induced phase shift.

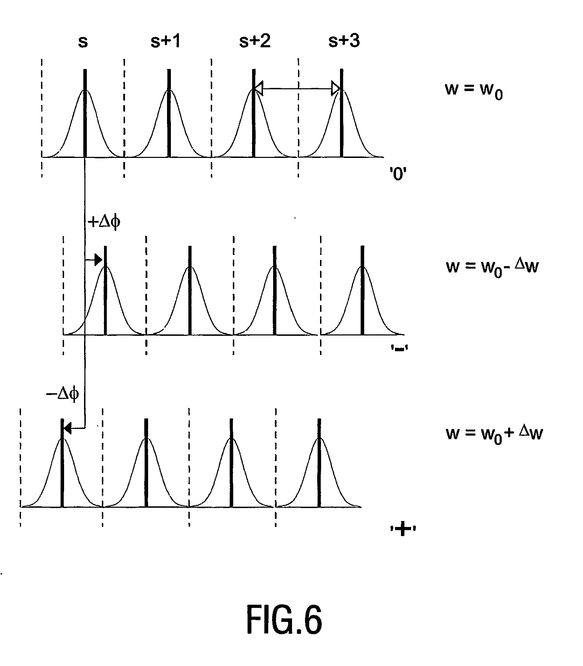

Fig. 6 shows a diagram, similar to Fig. 4 and 5, indicating high-density nominal space run lengths and an adjusted decision level pattern according to an embodiment. As shown in Fig. 6, the decision levels of the decision level pattern are adjusted in line with the phase shift or error $\Delta\phi$. This allows the use of a small space increment (i.e. high density) while keeping the error rate during modulation sufficiently low. Preferably, the low-frequency laser modulation is synchronized with the data to avoid errors during switching. More levels, e.g.'+', '0' and '-' as indicated in Fig. 5, or one or more intermediate levels, or even a continuous adjustment of the levels (e.g. for sinusoid modulation) may be used as well. Moreover, this method is not restricted to pulse position modulation, but may be applied more generally to all kind of modulations where decision levels are used for decoding or demodulation.

In an embodiment of the invention, a square-wave modulation at N/M times the bit frequency, where M is considerably greater than 2 but small enough to achieve a modulation frequency beyond the bandwidth of the PLL circuit, may be used. In this case, two sets of decision levels,'-' and '+' (see Fig. 6), corresponding to the low period or range ($w = w_0 - \Delta w$) and the high period or range ($w = w_0 + \Delta w$) of the modulation, respectively, are used during run length detection, where the correct decision level set can be selected, synchronized with the modulation. In this embodiment, only pulse position modulation is used to store information, i.e. short marks only are used to separate the space run lengths which contain the actual data. The modulation code can be constructed in such a way that data in subsequent low periods is DC-free, as is the data in subsequent high periods. In that case a separate running digital sum (RDS) can be calculated for each set of levels, which may then be used in a loop filter to actively adjust the decision levels.

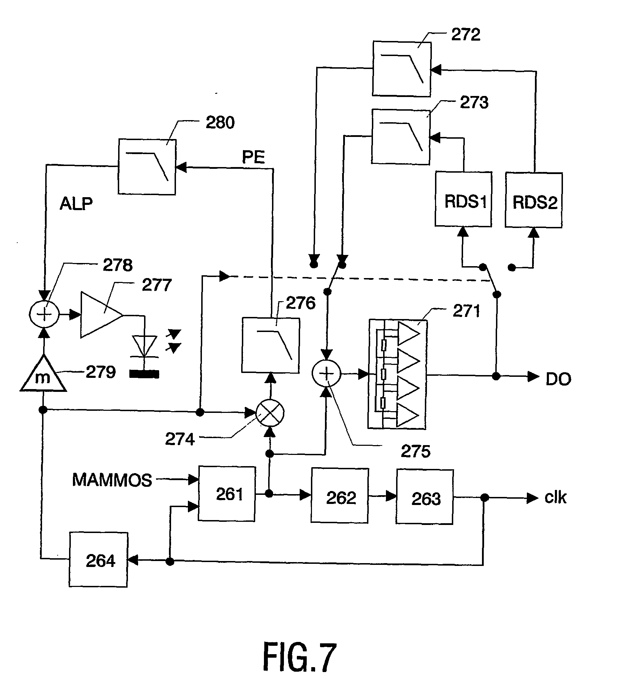

Fig. 7 shows an example of a circuit arrangement with a decision level adjustment function according to an embodiment of the invention. The detected MAMMOS run length signal output from the pickup unit 30 of Fig. 1 is supplied to a phase detector 261 of the PLL circuit of the clock generator 26 of Fig. 1, in which the phase of the run length signal is compared with the phase of an output signal of a voltage controlled oscillator (VCO) 263 of the PLL circuit. Additionally, the feedback signal is supplied to a clock divider 264 which divides the clock frequency and supplies it to a modulation circuit 279 for laser power modulation. The output of the phase detector 261, which corresponds to the phase difference between the run length signal and the feedback signal, is supplied to a loop filter 262 for extracting the desired frequency to be phase-controlled in the PLL circuit.

Due to the data-dependent field switching, the high-frequency components of the phase error $\Delta\phi$ from the phase detector 261 contain the pulse positions of the reproduced data. Window comparators 271 with appropriate decision levels determine which nominal run length has been detected. Since the code is DC-free, the average of the pulse positions, ranging e.g. over a period [-N,N], is equal to zero when the laser power is constant. When the laser power is modulated at a frequency M times lower than the bit clock, the phase error from the phase detector 261 contains synchronous, low-frequency laser power error information, which is demodulated by a demodulation or mixing circuit 274 to which the laser modulation signal at the output of the clock divider 264 is supplied, and is extracted by means of a low-pass filter 276. The combination of the mixing circuit and the low-pass filter can be regarded as the equivalent of a band-pass filter around the modulation frequency ('lock-in' detection). The extracted phase error signal is then used as the control signal PE for power control, which is supplied to an averaging circuit 280, e.g. a filter circuit, to obtain an averaged power control signal ALP to be added to the laser power modulating signal in an additional adding circuit 278. The combined power control signal is supplied via a driving amplifier 277 to the laser diode of the pickup unit 30 of Fig. 1.

The laser modulation also causes the pulse positions to shift in dependence on the sign of the modulation, as illustrated in Fig. 5. This means that the average pulse position in subsequent low periods and in subsequent high periods is no longer DC-free, i.e. RDS > 0 and RDS < 0, respectively.

In an embodiment of the invention, a running digital sum (RDS) is determined and monitored for the low and high periods or level ranges in respective summing circuits RDS1, RDS2, using respective integrators or loop filters 272, 273. These RDS values are then used to adjust the decision levels of the window comparators 271 so that the detected pulse positions are DC-free. In other words, the loop filters 272, 273 are adapted to minimize the respective RDS values by generating an appropriate offset (ideally $\pm\Delta\phi$ as shown in Fig. 6) to be supplied to the decision levels of the window comparators 271. The decision level adjustment can be achieved in that an adding circuit 275 is arranged to add the selected respective filtered RDS value to the phase error signal obtained at the output of the phase detector 261. As shown in Fig. 7, the laser modulation signal is used to select the corresponding RDS and offset value by using a controlled switching arrangement. Thereby, the RDS value which corresponds to the actual range, e.g. level "+" or "-", can be selected in synchronism with the modulation signal. Preferably, the loop filters 272, 273, which may be digital filters, are clamped in the periods during which they receive no signal.

It is noted that the present invention may be applied to any reading system for domain expansion magneto-optical disk storage systems in which a decision level pattern is used for detecting or decoding readout data. Any suitable reading parameter may be varied to control the copy window size. Furthermore, any suitable change or modulation pattern may be applied to the selected reading parameter so as to induce the phase error of the readout signal, while any characteristic value of the change pattern may then be used for the proposed decision level adjustment. The decision level adjustment may be based on any arithmetical or logical processing of a signal corresponding to the selected characteristic value of the change pattern. Hence, the RDS loop consisting of blocks RDS1, RDS2, 271 to 273, and 275 may be replaced by a hardware or software controlled analog or digital processing circuit by which a linear or non-linear shift of the decision level(s) can be generated. Moreover, instead of the offset control proposed in the above-described embodiments, the decision levels may be adjusted in the window comparators 271 through a control of respective reference signals or reference signal adjusting circuits.

**Claims**

1. A method of reading a magneto-optical recording medium (10) comprising a storage layer and a readout layer, wherein an expanded domain leading to a readout pulse is generated in said readout layer by copying of a mark region from said storage layer to said readout layer upon heating by a radiation power and with the help of said external magnetic field, said method comprising the step of:

a) controlling the size of a spatial copy window of said copying process by varying a predetermined reading parameter and said method being **characterized by** the following steps : varying said predetermined reading parameter in response to a control information derived from said readout pulse,

b) applying a predetermined additional pattern of change to said predetermined parameter, and

c) adjusting a decision level pattern used for deciding on a readout value in dependence on a characteristic parameter of said additional change pattern.

2. A method according to claim 1, wherein said control information is derived from a deviation ($\Delta\phi$) of the phase of a clock signal recovered from said readout pulse with respect to the average phase value of a clock signal derived from said readout pulse.

3. A method according to claim 1 or 2, wherein said control information is derived from a deviation of the phase of a clock signal recovered from said readout pulse with respect to the phase of a wobbled groove or of a series of embossed marks provided on the recording medium.

4. A method according to claim 1, wherein said readout value is a code run length.

5. A method according to claim 4, wherein said code run length is a space run length or a pulse position.

6. A method according to claim 1, wherein said predetermined parameter corresponds to the value of said radiation power and/or said external magnetic field.

7. A method according to claim 1, wherein said additional change pattern is a periodic modulation pattern having a predetermined frequency, and wherein said characteristic parameter corresponds to the sign and/or amplitude of said periodic modulation pattern.

8. A method according to claim 1, wherein said decision level pattern comprises at least one decision level.

9. A method according to claim 8, wherein the decision level of said decision level pattern is adjusted to a respective intermediate level.

10. A method according to claim 9, wherein said respective intermediate level is selected from at least one discrete intermediate level.

11. A method according to claim 10, wherein said at least one discrete intermediate level comprises a first intermediate level corresponding to a first range of said characteristic parameter and a second intermediate level corresponding to a second range of said characteristic parameter.

12. A method according to claim 9, wherein said predetermined additional pattern is selected such that DC-free readout data is obtained, and wherein said adjusting step is performed through monitoring of running sums calculated for each set of intermediate levels.

13. A method according to claim 12, wherein said decision level pattern is adjusted by respective loop filter means (262, 272, 273) to which said separate running sums are supplied.

14. A method according to claim 9, wherein said respective intermediate level is obtained by a continuous level adjustment.

15. A method according to claim 1, wherein said control information is obtained from a deviation of a maximum value of a phase error of said recovered clock signal from a predetermined set value.

16. A reading apparatus for reading from a magneto-optical recording medium (10) comprising a storage layer and a readout layer, wherein an expanded domain leading to a readout pulse is generated in said readout layer by copying of a mark region from said storage layer to said readout layer upon heating by a radiation power and with the help of an external magnetic field, said apparatus comprising:

a) control means (30, 32) for controlling the size of a spatial copy window (w) of said copying process through variation of a predetermined reading parameter **characterized by** variation of said predetermined reading parameter in response to a control information derived from said readout pulse,

b) change means (32) for applying a predetermined additional pattern of change to said predetermined parameter, and

c) adjusting means (271-273, 275, RDS1, RDS2) for adjusting a decision level pattern used for deciding on a readout value in dependence on a characteristic parameter of said additional change pattern.

17. A reading apparatus according to claim 16, wherein said adjusting means comprise comparator means (271) for setting said decision level pattern and summing means (RDS1, RDS2) for calculating at least one running sum used for adjusting said decision level pattern.

18. A reading apparatus according to claim 17, wherein said adjusting means comprise loop filter means (272, 273) for filtering said at least one running sum.

19. A reading apparatus according to claim 17 or 18, wherein said adjusting means comprise adding means (275) for adding said at least one running sum to an input signal of said comparator means (271).

20. A reading apparatus according to claim 16, wherein said input signal is obtained from a phase-locked loop circuit (26) of a clock recovery means used for generating said control information.

21. A reading apparatus according to claim 16, wherein said change means (32) are arranged to use a periodic pattern of a predetermined frequency as said predetermined additional change pattern.

**Patentansprüche**

1. Verfahren zum Lesen eines magnetooptischen Aufzeichnungsmediums (10), das eine Speicherschicht und eine Ausleseschicht umfasst, wobei eine expandierte Domäne, die zu einem Ausleseimpuls führt, in der Ausleseschicht erzeugt wird, indem eine Markierungsregion bei Erhitzen mittels einer Strahlungsleistung und mit Hilfe des externen Magnetfeldes von der Speicherschicht in die Ausleseschicht kopiert wird, wobei das Verfahren folgenden Schritt umfasst:

Steuern der Größe eines räumlichen Kopierfensters des Kopierprozesses durch Verändern eines vorgegebenen Leseparameters, und wobei das Verfahren durch die folgenden Schritte **gekennzeichnet** ist:

a) Verändern des vorgegebenen Leseparameters in Reaktion auf Steuerungsinformationen, die aus dem Ausleseimpuls abgeleitet wurden;

b) Anwenden eines vorgegebenen zusätzlichen Änderungsmusters auf den vorgegebenen Parameter, und

c) Einstellen eines Entscheidungsschwellenmusters, das zum Entscheiden über einen Auslesewert verwendet wird, in Abhängigkeit von einem charakteristischen Parameter des zusätzlichen Änderungsmusters.

2. Verfahren nach Anspruch 1, wobei die Steuerungsinformationen aus einer Abweichung ($\Delta\phi$) der Phase eines aus dem Ausleseimpuls gewonnenen Taktsignals relativ zu dem durchschnittlichen Phasenwert eines aus dem Ausleseimpuls abgeleiteten Taktsignals abgeleitet werden.

3. Verfahren nach Anspruch 1 oder 2, wobei die Steuerungsinformationen aus einer Abweichung der Phase eines aus dem Ausleseimpuls gewonnenen Taktsignals relativ zu der Phase einer gewobbelten Rille oder einer Reihe geprägter Markierungen, die sich auf Speichermedium befinden, abgeleitet werden.

4. Verfahren nach Anspruch 1, wobei der Auslesewert eine Codelauflänge ist.

5. Verfahren nach Anspruch 4, wobei die Codelauflänge eine Impulslückenlauflänge oder eine Impulsposition ist.

6. Verfahren nach Anspruch 1, wobei der vorgegebene Parameter dem Wert der Strahlungsleistung und/oder des externen Magnetfeldes entspricht.

7. Verfahren nach Anspruch 1, wobei das zusätzliche Änderungsmuster ein periodisches Modulationsmuster mit einer vorgegebenen Frequenz ist und wobei der charakteristische Parameter dem Vorzeichen und/oder der Amplitude des periodischen Modulationsmusters entspricht.

8. Verfahren nach Anspruch 1, wobei das Entscheidungsschwellenmuster wenigstens eine Entscheidungsschwelle umfasst.

9. Verfahren nach Anspruch 8, wobei die Entscheidungsschwelle des Entscheidungsschwellenmusters auf ein jeweiliges Zwischenniveau eingestellt wird.

10. Verfahren nach Anspruch 9, wobei das jeweilige Zwischenniveau aus wenigstens einem diskreten Zwischenniveau ausgewählt ist.

11. Verfahren nach Anspruch 10, wobei das wenigstens eine diskrete Zwischenniveau ein erstes Zwischenniveau, das einem ersten Bereich des charakteristischen Parameters entspricht, und ein zweites Zwischenniveau, das einem zweiten Bereich des charakteristischen Parameters entspricht, umfasst.

12. Verfahren nach Anspruch 9, wobei das vorgegebene zusätzliche Muster so ausgewählt ist, dass gleichstromfreie Auslesedaten erhalten werden, und wobei der Einstellschritt durch Überwachen von laufenden Summen ausgeführt wird, die für jede Gruppe von Zwischenniveaus berechnet werden.

13. Verfahren nach Anspruch 12, wobei das Entscheidungsschwellenmuster durch ein jeweiliges Schleifenfiltermittel (262, 272, 273) eingestellt wird, in das die separaten laufenden Summen eingespeist werden.

14. Verfahren nach Anspruch 9, wobei das jeweilige Zwischenniveau durch eine kontinuierliche Niveaueinstellung erhalten wird.

15. Verfahren nach Anspruch 1, wobei die Steuerungsinformationen aus einer Abweichung eines Maximalwertes eines Phasenfehlers des gewonnenen Taktsignals von einem vorgegebenen Sollwert erhalten werden.

16. Lesevorrichtung zum Lesen von einem magnetooptischen Aufzeichnungsmedium (10), das eine Speicherschicht und eine Ausleseschicht umfasst, wobei eine expandierte Domäne, die zu einem Ausleseimpuls führt, in der Ausleseschicht erzeugt wird, indem eine Markierungsregion bei Erhitzen mittels einer Strahlungsleistung und mit Hilfe des externen Magnetfeldes von der Speicherschicht in die Ausleseschicht kopiert wird, wobei die Vorrichtung Folgendes umfasst:

   a) ein Steuerungsmittel (30, 32) zum Steuern der Größe eines räumlichen Kopierfensters (w) des Kopierprozesses durch Verändern eines vorgegebenen Leseparameters,
   **gekennzeichnet durch** Verändern des vorgegebenen Leseparameters in Reaktion auf Steuerungsinformationen, die aus dem Ausleseimpuls abgeleitet wurden;
   b) ein Änderungsmittel (32) zum Anwenden eines vorgegebenen zusätzlichen Änderungsmusters auf den vorgegebenen Parameter, und
   c) ein Einstellmittel (271-273, 275, LDS1, LDS2) zum Einstellen eines Entscheidungsschwellenmusters, das zum Entscheiden über einen Auslesewert verwendet wird, in Abhängigkeit von einem charakteristischen Parameter des zusätzlichen Änderungsmusters.

17. Lesevorrichtung nach Anspruch 16, wobei das Einstellmittel ein Komparatormittel (271) zum Einstellen des Entscheidungsschwellenmusters und ein Summiermittel (LDS1, LDS2) zum Berechnen wenigstens einer laufenden Summe, die zum Einstellen des Entscheidungsschwellenmusters verwendet wird, umfasst.

18. Lesevorrichtung nach Anspruch 17, wobei das Einstellmittel ein Schleifenfiltermittel (272, 273) zum Filtern der wenigstens einen laufenden Summe umfasst.

19. Lesevorrichtung nach Anspruch 17 oder 18, wobei das Einstellmittel ein Addiermittel (275) zum Addieren der wenigstens einen laufenden Summe zu einem Eingangssignal des Komparatormittels (271) umfasst.

20. Lesevorrichtung nach Anspruch 16, wobei das Eingangssignal aus einem Phasenregelkreis (26) eines Taktgewinnungsmittels, das zum Erzeugen der Steuerungsinformationen verwendet wird, erhalten wird.

21. Lesevorrichtung nach Anspruch 16, wobei das Änderungsmittel (32) dafür konfiguriert ist, ein periodisches Muster einer vorgegebenen Frequenz als das vorgegebene zusätzliche Änderungsmuster zu verwenden.

**Revendications**

1. Procédé pour lire un support d'enregistrement magnéto-optique (10) comprenant une couche mémoire et une couche de lecture, dans lequel un domaine expansé conduisant à une impulsion de lecture est généré dans ladite couche de lecture par la copie d'une région de marques à partir de ladite couche de mémoire vers ladite couche de lecture lors du chauffage par une puissance rayonnante et avec l'aide dudit champ magnétique externe, ledit procédé comprenant l'étape de commande de la taille d'une fenêtre de copie spatiale dudit traitement de copie en faisant varier un paramètre de lecture prédéterminé et ledit procédé étant **caractérisé par** les étapes suivantes :

   a) modification dudit paramètre de lecture en réponse à une information de commande dérivée de ladite impulsion de lecture,
   b) application d'un modèle prédéterminé supplémentaire de modification audit paramètre prédéterminé, et
   c) ajustement d'un modèle de niveau de décision utilisé pour décider d'une valeur de lecture en fonction d'un paramètre caractéristique dudit modèle de modification supplémentaire.

2. Procédé selon la revendication 1, dans lequel ladite information de commande est dérivée à partir d'une déviation $\Delta\phi$ de la phase d'un signal d'horloge récupéré de ladite impulsion de lecture par rapport à la valeur moyenne de la phase d'un signal d'horloge dérivé de ladite impulsion de lecture.

3. Procédé selon la revendication 1 ou 2, dans lequel ladite information de commande est dérivée à partir d'une déviation de la phase d'un signal récupéré de la dite impulsion de lecture par rapport à la phase d'un sillon oscillant ou d'une série de marques en relief fournies sur le support d'enregistrement.

4. Procédé selon la revendication 1, dans lequel ladite valeur de lecture est une plage code.

5. Procédé selon la revendication 4, dans lequel ladite plage code est une plage code espace ou une position d'impulsion.

6. Procédé selon la revendication 1, dans lequel le paramètre prédéterminé correspond à la valeur de ladite puissance de rayonnement et/ou dudit champ magnétique externe.

7. Procédé selon la revendication 1, dans lequel ledit modèle supplémentaire de modification est un modèle de modulation périodique ayant une fréquence prédéterminée, et dans lequel ledit paramètre caractéristique correspond au signe et/ou à l'amplitude dudit modèle de modulation périodique.

8. Procédé selon la revendication 1, dans lequel ledit modèle de niveau de décision comprend au moins un niveau de décision.

9. Procédé selon la revendication 8, dans lequel le niveau de décision dudit modèle de niveau de décision est ajusté à un niveau intermédiaire respectif

10. Procédé selon la revendication 9, dans lequel ledit niveau intermédiaire respectif est choisi à partir d'au moins un niveau intermédiaire discret.

11. Procédé selon la revendication 10, dans lequel ledit au moins un niveau intermédiaire comprend un premier niveau correspondant à un premier intervalle dudit paramètre caractéristique et un second niveau intermédiaire correspondant à un second intervalle dudit paramètre caractéristique.

12. Procédé selon la revendication 9, dans lequel ledit modèle supplémentaire prédéterminé est choisi de sorte qu'une donnée de lecture exempte de composante CC est obtenue, et dans lequel ledit pas d'ajustement est exécuté par la surveillance de sommes glissantes calculées pour chaque ensemble de niveaux intermédiaires.

13. Procédé selon la revendication 12, dans lequel ledit modèle de niveau de décision est ajusté par des moyens respectifs de filtre à boucle (262, 272, 273) à qui lesdites sommes glissantes séparées sont adressées.

14. Procédé selon la revendication 9, dans lequel ledit niveau intermédiaire respectif est obtenu par ajustement continu de niveau.

**15.** Procédé selon la revendication 1, dans lequel ladite information de commande est obtenue à partir d'une déviation de la valeur maximum d'une erreur de phase dudit signal d'horloge récupéré par rapport à une valeur fixée prédéterminée.

**16.** Appareil de lecture pour lire à partir d'un support d'enregistrement magnéto-optique (10) comprenant une couche mémoire et une couche de lecture, dans lequel un domaine expansé conduisant à une impulsion de lecture est généré dans ladite couche de lecture par la copie d'une région de marque de ladite couche de mémoire vers ladite couche de lecture lors du chauffage par une puissance rayonnante et avec l'aide d'un champ magnétique externe, ledit appareil comprenant :

a) des moyens de commande (30, 32) pour commander la taille d'une fenêtre de copie spatiale (w) dudit processus de copie par la modification d'un paramètre de lecture prédéterminé **caractérisé par** le changement dudit paramètre de lecture prédéterminé en réponse à une information de commande dérivée de ladite impulsion de lecture,

b) des moyens de modification (32) pour appliquer un modèle supplémentaire prédéterminé de modification audit paramètre prédéterminé, et

c) des moyens d'ajustement (271-273, 275, RDS 1, RDS2) pour ajuster un modèle de niveau de décision utilisé pour décider d'une valeur de lecture en fonction d'un paramètre caractéristique dudit modèle supplémentaire de modification.

**17.** Appareil de lecture selon la revendication 16, dans lequel lesdits moyens d'ajustement comprennent des moyens de comparaison (271) pour fixer ledit modèle de niveau de décision et des moyens de sommation (RDS1, RDS2) pour calculer au moins une somme glissante utilisée pour ajuster ledit modèle de niveau de décision.

**18.** Appareil de lecture selon la revendication 17, dans lequel lesdits moyens d'ajustement comprennent des moyens de filtre à boucle (272, 273) pour filtrer ladite au moins une somme glissante.

**19.** Appareil de lecture selon la revendication 17 ou 18, dans lequel lesdits moyens d'ajustement comprennent des moyens (275) pour ajouter au moins une somme glissante à un signal d'entrée desdits moyens de comparaison (271).

**20.** Appareil de lecture selon la revendication 16, dans lequel ledit signal d'entrée est obtenu à partir d'un circuit de boucle à verrouillage de phase (26) d'un moyen de récupération des impulsions d'horloge utilisé pour générer ladite information de commande.

**21.** Appareil de lecture selon la revendication 16, dans lequel lesdits moyens de modification (32) sont agencés pour utiliser un modèle périodique d'une fréquence prédéterminée comme ledit modèle supplémentaire prédéterminé de modification.

FIG. 1

FIG.2

FIG.3

FIG.4

FIG.5

FIG.6

FIG.7